# EUROPEAN PATENT SPECIFICATION

(11) **EP 3 756 776 B1**
(45) Date of publication and mention of the grant of the patent: **09.08.2023**
(21) Application number: 20178767.8
(22) Date of filing: 08.06.2020
(51) Int. Cl.: B09B 3/00, B09C 1/08, A62D 3/33, B01D 53/73, C04B 28/02, C04B 111/00, B09B 3/25, B09B 101/30

(54) **METHOD AND USE OF FLY ASH AND AIR POLLUTION CONTROL RESIDUES (APCR) FOR THE TREATMENT OF PER- AND POLY-FLUOROALKYL SUBSTANCES (PFAS) IN CONTAMINATED SOIL**
VERFAHREN UND VERWENDUNG VON FLUGASCHE- UND LUFTVERSCHMUTZUNGSKONTROLLRÜCKSTÄNDEN (APCR) ZUR BEHANDLUNG VON PER- UND POLYFLUORALKYL-SUBSTANZEN (PFAS) IN KONTAMINIERTEM BODEN
METHODE ET UTILISATION DE CENDRES VOLANTES ET RÉSIDUS DE CONTRÔLE DE LA POLLUTION DE L'AIR (APCR) POUR LE TRAITEMENT DE SUBSTANCES PER- ET POLY-FLUOROALKYLES (PFAS) DANS UN SOL CONTAMINÉ

(30) Priority: 27.06.2019 SE 1930228
(43) Date of publication of application: 30.12.2020
(73) Proprietor: Ragn-Sells Treatment and Detox AB, 191 29 Sollentuna (SE)
(72) Inventor: Travar, Igor, 141 92 Huddinge (SE); Ahrens, Lutz, 756 43 Uppsala (SE); Sörengard, Mattias, 786 97 Björbo (SE)
(74) Representative: Herbjørnsen, Rut

(56) References cited:
- WO-A1-2015/113888
- DE-A1-102015 007 292

## Description

### Technical Field

The present invention relates to a use of fly ash or air pollution control residues (APCRs) for the treatment of per- and poly-fluoroalkyl substances (PFASs) in contaminated soil and a method of stabilizing PFASs in contaminated soil.

### Background

PFASs are fluorinated aliphatic compounds with strong bonds between carbon and fluoride (C-F). PFAS have some useful properties; they are water repellent and decrease surface tension. They therefore find many applications in different industries, for example, as surfactants and coatings. They are used as water repellents and impregnating agents for leather and textiles and are also a component of fire extinguishing foams, as well as cosmetics and pesticides. Firefighting, and firefighting training are major sources of PFAS contamination in soil.

Different subgroups of PFAS exist. In perfluoroalkyl compounds, all hydrogens on all carbons have been replaced by fluorine; whereas hydrogens on some but not all carbons are replaced by fluorines in polyfluoroalkyl compounds, which also contain a perfluoroalkyl moiety, CₙF₂ₙ+1⁻. Perfluoroalkyl sulfonic acids (PFSAs, CₙF₂ₙ₊₁SO₃H) with 4-10 fully fluorinated carbon chain and perfluoroalkyl carboxylic acids (PFCAs, CₙF₂ₙ₊₁COOH) typically with 3-15 fully fluorinated carbon chain are the most commonly reported subgroups of PFASs. Long-chain PFASs are PFCAs with ≥8 carbons and PFSAs with ≥6 carbons.

Generally, these long-chain compounds are characterized as nonbiodegradable, highly persistent, potentially toxic and bio-accumulative in blood, liver and kidneys due to the high-energy C-F bonds and long alkyl chains. For these reasons, together with their widespread occurrence, PFASs have been highlighted as environmental and health hazards in recent years. Two particular compounds, perfluorooctanoic acid (PFOA, C₇F₁₅COOH) and perfluorooctane sulfonic acid (PFOS, C₈F₁₇SO₃H), have been identified as the most abundant and widespread species of PFASs in soil and aquatic environments. For these reasons they have come to be seen as environmental and health hazards. The European union and the US Environmental protection Agency, as well as other countries, have issued information about legislation concerning PFASs in soil, waste and water. The Swedish Geotechnical Institute has suggested the guideline value for sensitive land use (e.g. housing) 0.003 mg PFOS/kg and for less sensitive land use the guideline value is 0.020 mg PFOS/kg. Leaching limit values have not been set for PFASs in waste.

PFASs will not be completely degraded even in the presence of strong acids, bases, or oxidation agents. PFAS can only be degraded at high temperatures, 850 - 1200 °C They are also very mobile in the environment, through air, soil and water. Further, they tend to leak from contaminated sites and from landfilled soils, and have been detected in surface waters, wastewater and in the ground. Therefore, depositing PFAS contaminated soil in landfills is not a completely satisfactory solution.

Two particular compounds, perfluorooctanoic acid (PFOA) and perfluorooctane sulfonic acid (PFOS) have been identified as the most abundant and widespread species of PFAS in soil and aquatic environments.

Methods of soil washing have been proposed. Hale SE, Arp HPH, Slinde GA, Wade EJ, Bjorseth K, Breedveld GD, Straith BF, Moe KG, Jartun M & Hoiseter Å (2017) Sorbent amendment as a remediation strategy to reduce PFAS mobility and leaching in contaminated sandy soil from a Norwegian firefighting training facility. Chemosphere 171: 9-18 discloses a method in which PFAS-contaminated particles are separated from the bulk soil volume and the PFASs are extracted or desorbed from these particles. Such methods are not economically viable for fine-grained soils. Extraction agents such as methanol/sodium hydroxide have been used to extract PFASs from contaminated soil. Hale et al. found that water extracted more PFOS than methanol or acetonitrile indicating that water may be an excellent extraction agent. Encapsulation of contaminated soil may prevent or reduce the release of PFASs, but may not have long-term efficacy, in a time frame of several decades to centuries.

Another method of treating PFAS contaminated soil is known from document DE 10 2015 007292 A1.

Thus, PFAS contaminated sites need remediation. Excavation and off-site disposal is the most commonly used remediation option for PFAS-contaminated soil since the treatments on-site or in-situ have deficiencies and uncertainties with regard to the release of PFAS in the long term. Landfill disposal of PFAS-contaminated soil is related to potential environmental risks since PFASs can be released from disposed soil to landfill leachate. PFAS-contaminated leachate contaminates the recipient if the leachate is not treated properly. The traditional treatment facilities for landfill leachate are not constructed for removal of PFASs. Installation of new techniques for removal of PFASs from landfill leachate result in high investment and operation costs. Thus, a treatment method for reducing the solubility of PFAS in contaminated soil before disposal in a landfill would be desirable to reduce contamination of landfill leachate.

Attempts to stabilize PFASs in soil have been made. Hale et al. (above) also discloses the use of activated carbon to stabilize PFAS in soil.

Sörengård M, Kleja DB & Ahrens L (2019) Stabilization and solidification remediation of soil contaminated with poly- and perfluoralkyl substances (PFASs). Journal of Hazardous Materials 367: 639-646 describes solidification of PFAS-contaminated soil by mixing with several different materials, including powdered activated carbon (PAC), Rembind^{®}, pulverized zeolite, chitosan, hydrotalcite, bentonite, and calcium chloride. Active carbon-based additives were shown to have excellent performance in reducing leachates of PFASs, without marked loss of physical matrix stability. Rembind^{®} is a commercially available product comprising activated carbon, aluminium hydroxide and clay.

While materials such as Rembind^{®} and activated carbon have been shown to be effective stabilizing PFAS in soil, these materials are costly, especially in view of the large amounts of contaminated soil that need treatment. Also, the production of the materials requires resources and energy and therefore has an environmental effect.

### Summary

It is an object of the present invention to enable the immobilization of PFASs in contaminated soil in a cost-efficient way.

The invention relates to the use of fly ash and/or Air Pollution Control Residues (APCRs) from the combustion of waste and wood (biomass) for the immobilization of PFASs in contaminated soil prior landfilling. Accordingly, invention relates to the use of fly ash or Air Pollution Control Residue, APCR, according to claim 1. The invention also relates to a method of stabilizing PFAS in contaminated soil, according to claim 10.

In preferred embodiments, the fly ash or APCR is obtainable by combustion of wood chips. In other embodiments, the fly ash or APCR is obtainable by combustion of waste. The fly ash or APCR may be treated with an electrostatic precipitator or a bag filter combined with dry scrubber and with the addition of CaO. The best results were obtained with fly ash without any addition of amendments, treated with an electrostatic precipitator.

The effectiveness of the fly ash or APCR was found to be correlated to a low Z potential. Therefore, in preferred embodiments, the fly ash or APCR has a Z potential lower than 0, preferably lower than -2, even more preferably lower than -8.

After mixing, the mixture of soil and fly ash or APCR may deposited in a landfill.

The use of fly ash or APCR showed acceptable results for different types of PFAS. Particularly good results were achieved for treatment of PFOS contaminated soil, which is advantageous since PFOS is one of the most common types of PFAS found in soil.

The fraction of fly ash or APCR relative to the soil is preferably at least 4 %, more preferably at least 10 %, even more preferably at least 25 %.

The invention therefore relates to stabilization of PFASs in contaminated soil, that is immobilization of the PFASs by addition of a substance that reduces their mobility and leaching. Fly ash and APCR are both readily available waste products from the incineration of biomass or other types of waste, which also should not be released directly into the environment. Hence, there is a synergistic effect in the use of fly ash/APC residues for soil treatment, in that two types of contaminated waste, which both need to be treated, can be handled together and effectively used to treat each other.

At the same time, fly ash/APC residues from the combustion of wood chips or waste such as municipal solid waste and industrial waste are a resource that is cheap and readily available, since it is obtainable by a process that is already performed for handling waste. This makes the process very cost-efficient and environmentally friendly as it requires no additional raw materials or processing. Often, the combustion of municipal solid waste, and the cleaning of the resulting flue gas, is performed in a location close to the landfill, where the soil treatment takes place, making the process even more advantageous.

### Brief Description of the Drawings

The invention will be described in more detail in the following, by way of example and with reference to the appended drawings, in which
Figure 1 shows the total concentration of PFASs (the sum of 6:2 FTSA, 8:2 FTSA, PFOSA, PFBA, PFBS, PFDA, PFHpA, PFHxA, PFHxS, PFNA, PFOA, PFOS and PFPeA) in eluates after leaching test (diagrams to the left labelled a) and immobilization of PFASs after treatment with AC and APCRs (diagrams to the right labelled b)
Figures 2 to 5 show, for different types of PFAS, the concentration in eluates after leaching test (diagrams to the left labelled a) and immobilization after treatment with AC and APCRs (diagrams to the right labelled b). in particular, Values are shown for PFOA, PFOS, 6:2 FTSA and PFHxS, respectively.
Figure 6 shows pH values in different eluates after the leaching test

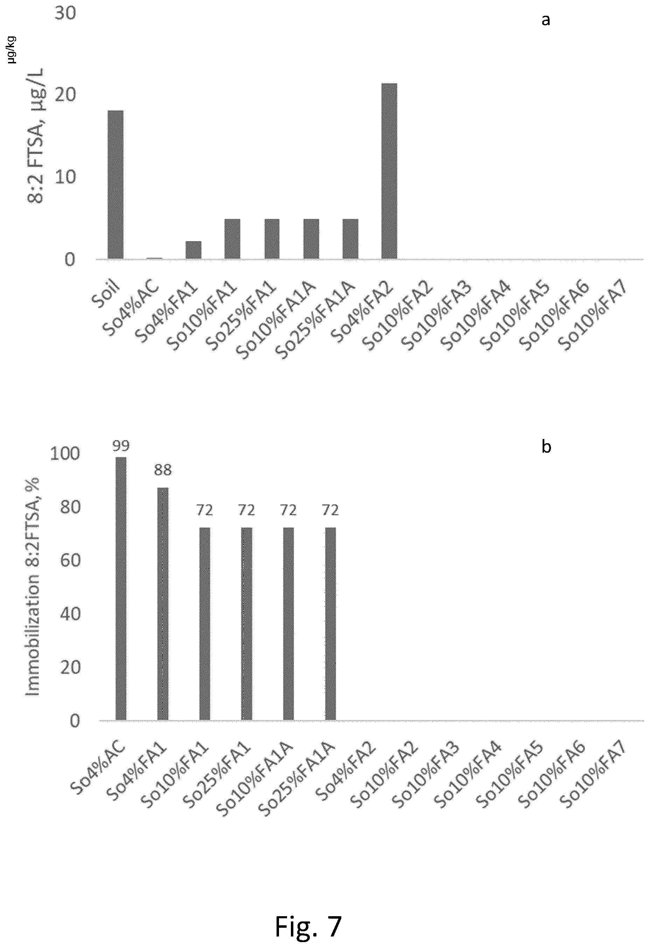

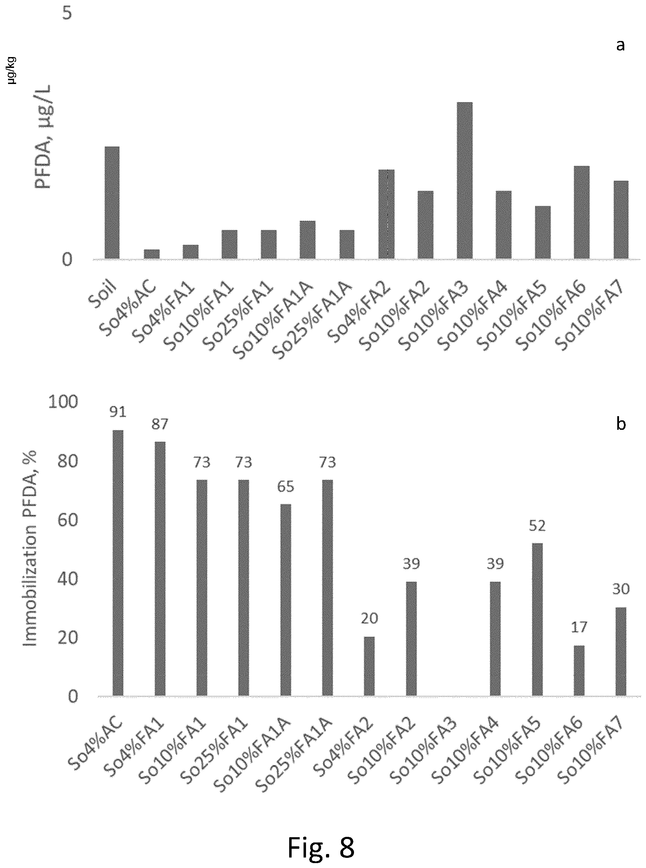

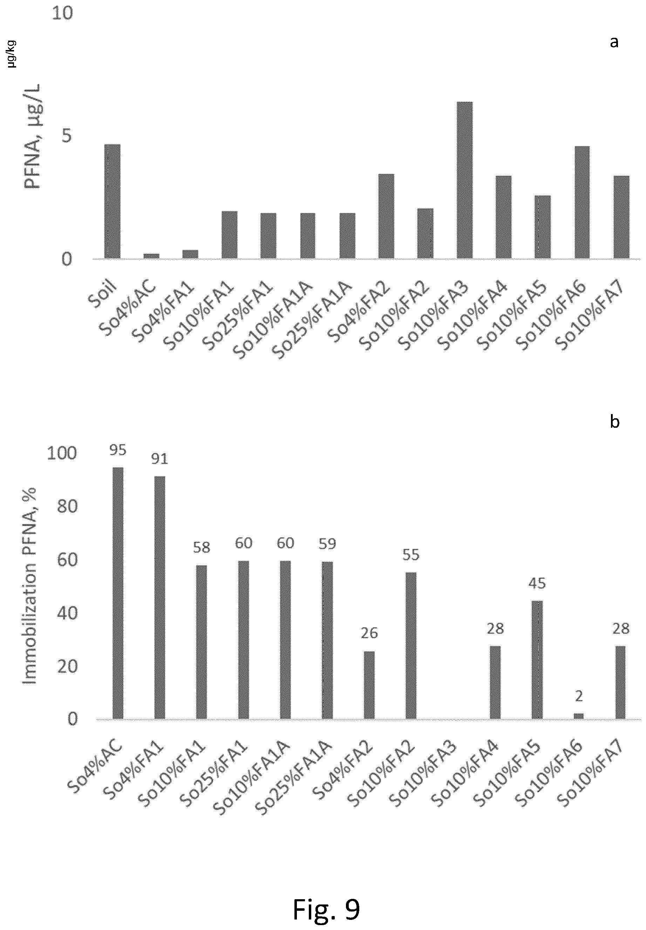

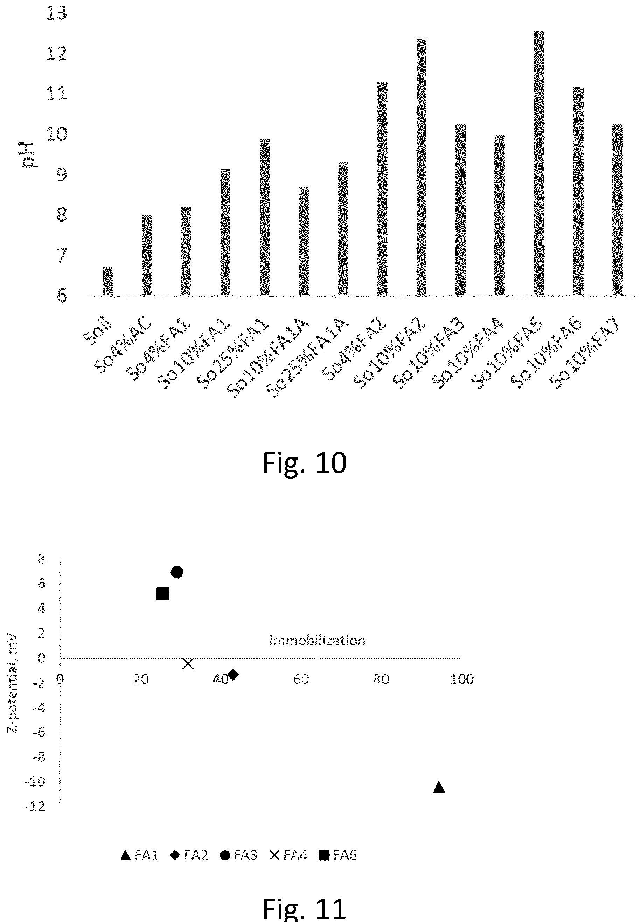

Figure 7 shows the Zeta-potential measured on the surface of APCRs versus immobilization of the total PFAS in soil with 10 % of APCR.

### Detailed Description

Fly ash is the result of combustion, for example of biomass such as wood or other organic material. Air pollution control residues can be defined as mixture of fly ash (i.e. particulate matter) that is carried over from the combustion chamber and removed physically from the flue gas stream (with cyclones, electrostatic filter or bag filters) and chemicals (such as burnt lime, lime slurry, caustic soda or urea) that are added to flue gases to remove HCl, SO₂, HF, NOₓ and metals such as Hg.

According to the invention, the mixing of PFAS-contaminated soil with certain types of fly ash or APCR will serve to stabilize the PFAS in the soil. To verify this, and to determine which types of fly ash/APCR would be the most effective, samples of soil were mixed with different types of fly ash/APCR, in varying concentrations, and leaching tests were performed to evaluate immobilization of PFASs after treatment. The soil/APCRs mixtures contained 4%, 10% and 25% of fly ash or APCRs (on dry base) respectively. A mixture with 4 % activated carbon was used as a reference, since this was the stabilization method described in the prior art.

For the purpose of the invention, the fly ash/APCR and the soil should be mixed to obtain a homogeneous mixture of soil and fly ash/APCR. As shown by the tests, both the type of fly ash/APCR and the relative amounts of fly ash/APCR and soil, will affect the properties of the mixture. The relative amounts should therefore be controlled. This can be achieved in any suitable way. One possible option is transportation of soil and fly ash/APCR in separate silos that are connected to a mixing station where the dosing (or amounts) of each material to the mixture is regulated with steering unit. Another possible option is mixing with help of "ALLU transformer screening buckets" attached to a wheel loader. Soil and fly ash/APCR are taken to a screening bucket in ratios prescribed after the leaching test and screened several times until a homogeneous mixture is obtained.

The treatment was studied using the batch leaching test at liquid to solid ratio (L/S) 10 L/kg according to Swedish standard SS-EN 12457-2 that will be described in following. The content of dry matter for soil, activated carbon and APCRs is determined by measuring the weight of material before and after drying in the oven at 105 °C for 24h. The soil was mixed with fly ash, APCR or AC according to above mentioned ratios. Each mixture contained 90 g of material on dry base. Soil mixtures and untreated soil were placed in duplicates in the bottles of 2 liters volume directly after mixing. Deionized water was added to each bottle to reach liquid to solid ratio (L/S) of 10 L/kg. The exact volume of deionized water added to each bottle was determined by correcting for the mass of moisture present in the sample (e.g. 892 ml of deionized water was added to 98.3 g of soil treated with 4%FA1). Bottles were placed in the agitator and agitated at about 20 rpm for 7 days until assumed equilibrium between soil/APCR and water. When the leaching test was finished, emulsions were placed in the centrifuge at 18000 rpm for 10 min to separate particles from the liquid phase. pH was measured in eluates directly after centrifugation. All water samples were stored at +4 °C prior to further analysis on PFAS. Soil mixtures treated with 10% and 25% FA1 were moistened and exposed to surrounding air at 21oC during 3 weeks to study the influence of ageing reactions in FA1 on stability of PFASs and leached afterwards according to described procedure.

The soil was analyzed using the leaching test, as will be discussed in more detail below, to determine the amount of PFASs in leachate from untreated soil and from the samples that had been treated with AC and APCR. The total amount of PFAS, and the amount of some important types of PFAS in the leachates were determined according to methods that will be discussed below.

The fly ash and air pollution control residues used in the test were collected from seven facilities after incineration of wood or waste. Air pollution control residues have been treated with electrostatic filters or bag filters with addition of ammoniac (NH3) and scrubbers where lime (CaO) is added to remove NOx and SOx from flue gases. The details about the fuel and its incineration and treatment are shown in Table 1.

**Table 1 Origin of APCRs**

| **APCR** | **Fuel** | **Incineration process** | **The treatment of flue gases** |
|---|---|---|---|
| FA1 | Wood chips | Incineration on grate | Electrostatic precipitator without addition of CaO to the flue gas stream |
| FA2 | Wood chips | Incineration on grate | Bag filter combined with dry scrubber (with addition of CaO) |
| FA3 | Household and industrial waste | Incineration on grate | Electrostatic precipitator and semi-dry scrubbers (slurry of water and CaO is injected) combined with activated carbon for removal of dioxines |
| FA4 | Paper, wood and plastic | Fluidised bed | Electrostatic precipitator and semi-dry scrubbers (slurry of water and CaO is injected) and activated carbon for removal of dioxines |
| FA5 | Wood chips | Vibrated grate | Bag filter and semi-dry scrubbers (slurry of water and CaO is injected) combined with activated carbon for removal of dioxines |
| FA6 | Wood chips | Incineration on grate | Electrostatic precipitator with addition of ammoniac (for treatment of NOx), condensation of flue gases and addition of CaO in dry scrubbers |
| FA7 | Waste, wood, oil | Fluidised bed | Cyclones combined with semi dry scrubbers, activated carbon and bag filter |

Each sample of soil was mixed with either 4 % activated carbon (AC), fly ash, or one of seven APCRs to evaluate immobilization of PFASs after treatment. The types of APCR and their concentrations are listed in table 2.

**Table 2 Acronyms of soil treated with APCRs**

| **Acronym** | **Description** |
|---|---|
| So4%AC | Soil treated with 4% activate carbon |
| So4%FA1 | Soil treated with 4% FA1 |
| So10%FA1 | Soil treated with 10% FA1 |
| So25%FA1 | Soil treated with 25% FA1 |
| So10%FA1A | Soil treated with 10% FA1 aged (carbonated) |
| So10%FA1A | Soil treated with 25% FA1 aged (carbonated) |
| So10%FA2 | Soil treated with 4% FA2 |
| So10%FA3 | Soil treated with 10% FA3 |
| So10%FA4 | Soil treated with 10% FA4 |
| So10%FA5 | Soil treated with 10% FA5 |
| So10%FA6 | Soil treated with 10% FA6 |
| So10%FA7 | Soil treated with 10% FA7 |

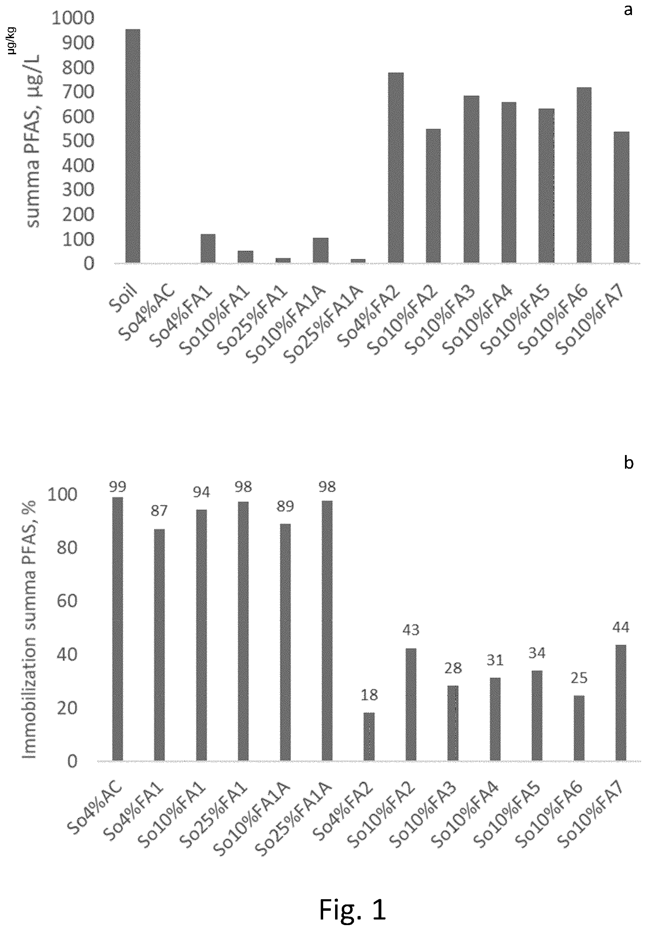

Figure 1 shows, in the diagram labelled a, the total concentration of all types of PFASs in eluates after leaching test and, in the diagram labelled b, the immobilization of the sum of PFASs after treatment with AC, fly ash and APCRs, respectively. The total concentration of PFAS includes 6:2FTSA, 8:2FTSA, PFDA PFHpA, PFHxS, PFNA, PFOA, PFOS, PFOSA, PFBA, PFHxaA and PFPeA.

In diagram a, the leftmost block shows that the amount of PFAS leached from untreated soil was 960 µg/kg. The other blocks are labelled as shown in Table 2. As can be seen, treatment with active coal reduced the amount of PFAS in the leachate by 99 %, to 7 µg/kg. Of the fly ash/APCR, treatment with FA1 was the most effective. As can be seen from the block labelled So25%FA1A, 25 % FA1A was almost as effective as active coal, reducing the leached amount to 22 µg/kg, corresponding to a reduction of 98%. The diagram labelled b shows the immobilization in the corresponding mixes, in percentage of the total content of PFAS. For example, the immobilization in the samples treated with FA1 in concentrations 4 %, 10 % and 25 were 87 %, 94 % and 98 % respectively. The immobilization in samples treated with 10 % and 25 % FA1A was 89 % and 98 %, respectively. This shows that FA1 and FA1A are highly effective in immobilizing PFAS in soil.

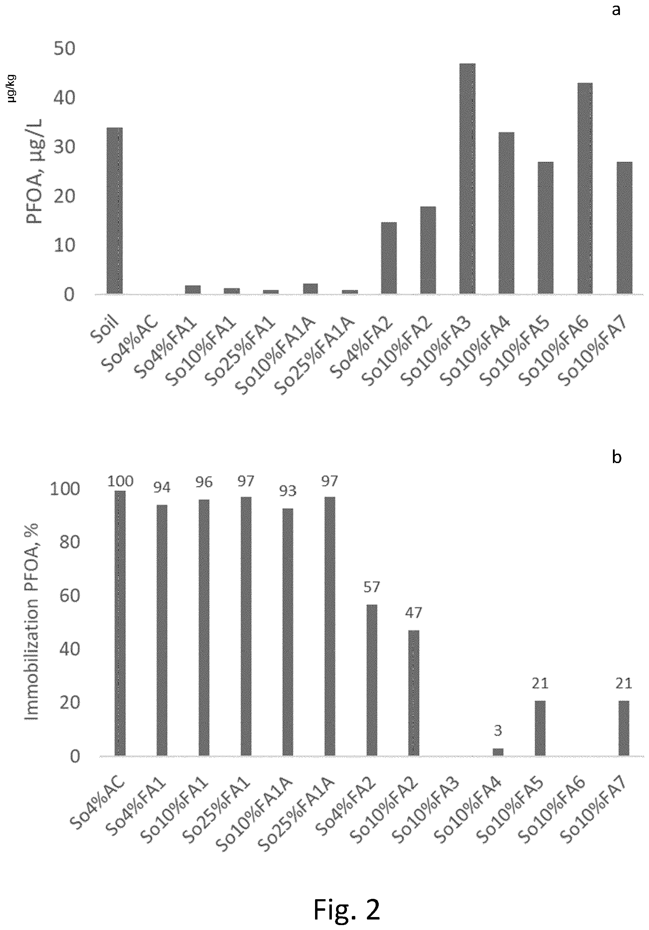

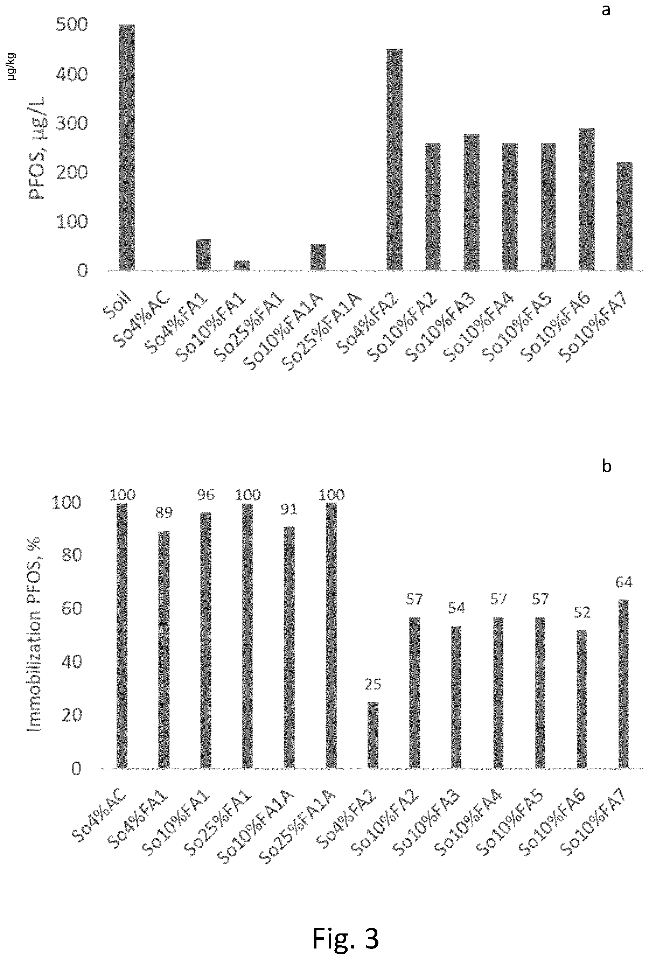

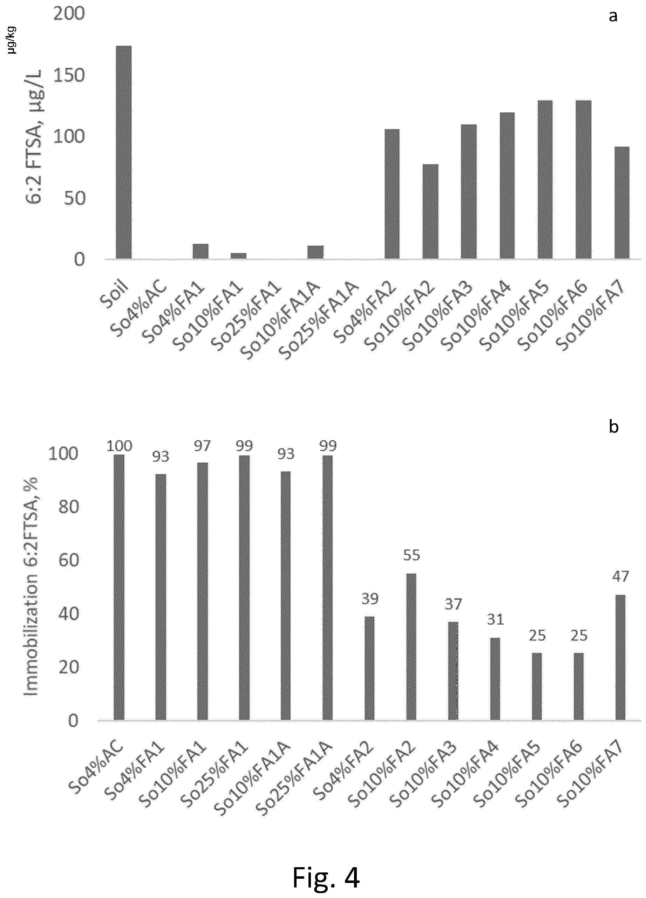

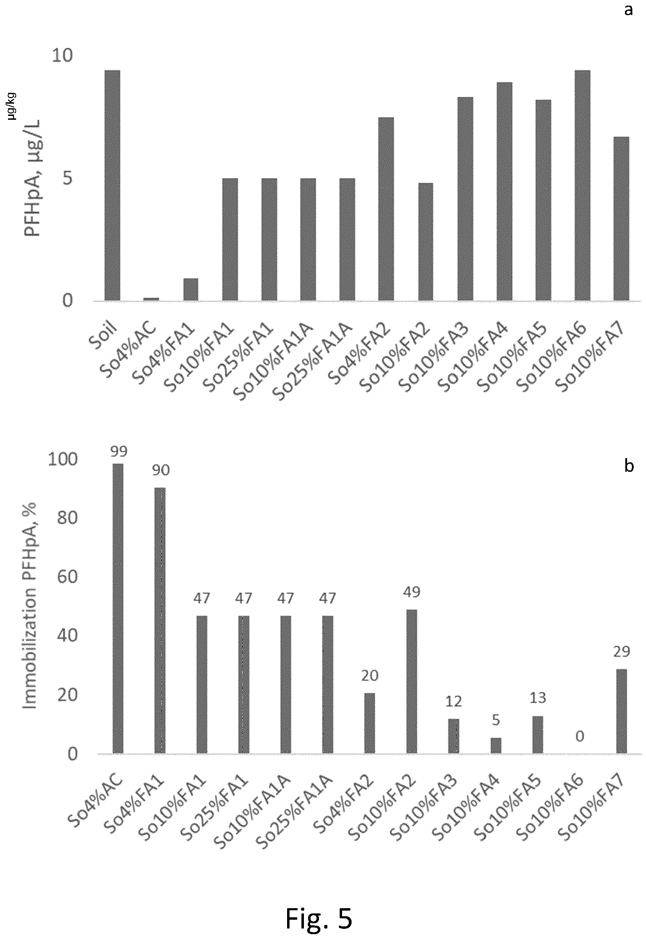

Figures 2-5, like Figure 1, each has a leftmost diagram labelled a and a rightmost diagram labelled b, showing corresponding data to diagrams a and b of Figure 1, but for different types of PFAS. Figure 2 shows data for PFOA and Figure 3 shows data for PFOS. Figures 4 and 5 show data for 6:2 FTSA and PFHxS, respectively. As can be seen in diagrams a of Figures 2 and 3, the amounts of PFOA and PFOS in the leachate were also significantly reduced for all concentrations of FA1, but in particular for the 25 % concentrations. As shown in diagram b of Figures 2 and 3 FA1 had immobilized up to 100 % of the PFOA and PFOS. The immobilization efficiency for the sum of PFASs in tread soil with other APCRs varied between 18% for So4%FA2 and 44% for SolO%FA7. Increased amount of APCRs from 4% to 10% in soil treated with FA2 decreased the release of sum PFASs for about 25% (from 782 µg/kg to 550 µg/kg). The higher amount of FA1 added to soil is positively related with immobilization of PFASs.

PFASs shows high affinity to be sorbed to AC. For example, Hale et al., as referenced above, observed that addition of 3% powdered AC (with a specific area of 726 m2/g) to contaminated soil in batch leaching tests reduced leaching of PFOS by 94-99.9%, from 6.4-54.5 µg/kg to 0.003-0.43 µg/kg. These findings are confirmed in our tests where addition of 4% AC reduced leaching of PFASs by 99% as shown in Figure 2. However, immobilization of PFASs in treated soils with APCRs was not directly related to unburnt fraction of organic matter in APCRs. For example, concentration of total organic coal (TOC) in FA1 was 3.9%, in FA2 11% and FA1 reduced solubility of sum PFAS 60% more than FA2.

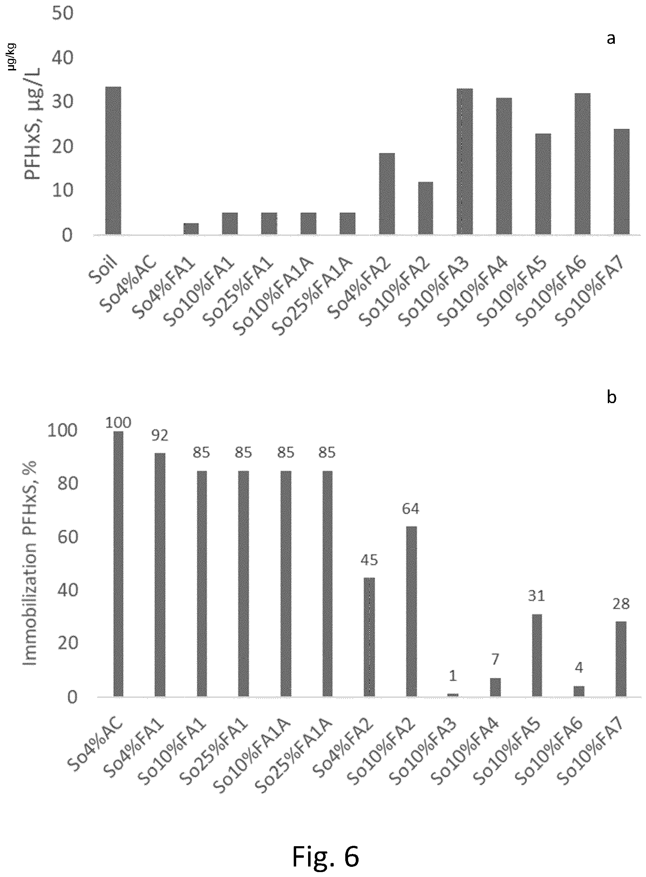

Most PFASs are anionic (negatively charged). The sorption strength of these substances is inversely corelated with pH (i.e. the higher pH results in less sorption of PFASs) since hydroxide ions (OH-) competes with anionic PFASs for the same adsorption sites on solid phase. The high pH of soil/APCR mixtures does not generate the optimal electrostatic solution chemistry for sorption of anionic PFASs. Therefore, it was not expected that alkaline materials such as APCRs could bind PFASs. In our tests, as shown in Figure 6 it was confirmed that treated soils with lower pH released less PFASs. For example, the soil treated with FA2, FA5, FA6 and FA7 where pH varied between 10.3 and 12.6 had the immobilization efficiency only 18-44% compared to FA1 where pH varied between 8 and 9.9 and immobilization efficiency was 87-98%. Carbonation of APCRs will result in decrease of pH and immobilization of PFASs in treated soil will probably increase over time.

Although pH was (strongly) alkaline in treated soil, APCRs showed impressed immobilization efficiency of PFASs, indicating that pH effect is not the only mechanism that controls electrostatic interactions between PFASs and APCRs i.e. immobilization of PFASs in these tests. Measurements of the zeta-potential (the potential difference between the dispersion medium and the stationary layer of fluid attached to the particle) showed that the surface of FA 1 is strongly negatively charged compared to other APCRs. This result indicates that the electronegativity of particle's surface attracts positively charged ions (cations such as Ca2+, metals Pb2+, Zn2+, Cd2+). These cations attract negatively charged PFASs. Thus, it seems that the presence of divalent cations combined with negative charge of the particle's surface determines sorption of PFASs on APCRs.

Figure 3 shows, for the different types of APCR used in the tests, the Zeta-potential measured on the surface of APCRs versus immobilization of sum PFASs in soil treated with 10% of APCRs. Results show that immobilization of PFASs in treated soil was positively related with electronegativity of APCR surface. Details about the zeta potential tests are provided below.

The soil contaminated with PFASs was excavated at firefighting training facility and transported to the laboratory. This soil was analysed on the total concentrations of PFASs and soluble amounts of PFASs using the leaching test at liquid to solid ratio L/S = 10 1/kg. Table 3 shows the amounts, Cs, of different types of PFAS in the excavated soil, and the soluble amounts Cw as determined by the leaching test. As can be seen, PFOS, PFOSA (perfluoroktansulfonamide C8) and 6:2 FTSA (Fluortelomersulfonate C6) were the most abundant PFASs in the soil. The leaching test showed that leachate was predominately contaminated with PFOS and 6:2 FTSA. The soil adsorption coefficient Kd =Cs/Cw, which is the ratio between concentration of substance in soil Cs and soluble fraction Cw indicates that the short chains of PFASs were more mobile than long chains i.e. they were washed out from the soil in contact with water (Kd was close to one for C<8). PFBA and PFPeA had higher concentrations in the leachate compared to soil (Kd <1). This means that water used in the leaching test extracted more PFBA and PFPeA than methanol that was used for determination of the total concentration in the soil. These results may be also attributed to the measurement uncertainty.

Table 3 shows the total amount of PFASs in soil and leached concentrations of PFASs from soil after leaching test at liquid to solid ratio L/S = 10 1/kg. The column labelled Soil Kd represents soil adsorption coefficient calculated as ratio between concentration of chemical in soil (Cs) and concentration of chemical substance in solution (Cw) after the leaching test. The column labelled So4%FA1 Kd lists corresponding values for the mixture of soil and 4 % FA1. As can be seen, the adsorption coefficient was increased for all tested mixtures by the addition of fly ash, by a factor between 1.75 for PFPeA to 12 for pFHxS.

**Table 3: total amount of PFAS in soil and leached concentrations of PFAS in soil.**

| **PFAS substance** | **Total amount in Soil Cs, µg/kg** | **Soluble amount in soil Cw, µg/kg** | **Soil Kd** | **So4%FA1 Kd** |
|---|---|---|---|---|
| PFBA (C4) | 4.6 ± 0.3 | 5.4 ± 3.1 | 0.8 | 1.6 |
| PFBS (C4) | 1.4 ± 0.4 | 1.3 ± 0.1 | 1.1 | 4 |
| PFPeA (C5) | 26 ± 4.5 | 34 ± 1.6 | 0.8 | 1.4 |
| PFHxA (C6) | 18 ± 2.5 | 14 ± 0.7 | 1.3 | 4.4 |
| PFHxS (C6) | 35 ± 1.8 | 33 ± 0.4 | 1.03 | 12.4 |
| 6:2 FTSA (C6) | 189 ± 5.3 | 174 ± 5.6 | 1 | 11.4 |
| PFHpA (C7) | 9.7 ± 1 | 8 ± 0.3 | 1.2 | 10.7 |
| PFDA (C8) | 31 ± 2.2 | 22 ± 0.8 | 1.4 | 15.5 |
| PFOS (C8) | 1379 ± 120 | 604 ± 36 | 2.3 | 21.5 |
| PFOSA (C8) | 317 ± 18 | 22 ± 3.1 | 14 | 32.5 |
| 8:2 FTSA (C8) | 47 ± 5.7 | 18 ± 3.1 | 2.6 | 20.9 |
| PFNA (C9) | 4.9 ± 0.3 | 3.8 ± 0.3 | 1.3 | 12.1 |
| PFDA (C10) | 5.2 ± 0.2 | 1.8 ± 0.2 | 3 | 16.7 |

### Methods

The batch leaching test at liquid to solid ratio (L/S) 10 L/kg according to Swedish standard SS-EN 12457-2 was performed on soil and treated soil directly after treatment in duplicates. The batch leaching test run for 7 days until assumed equilibrium between soil/APCR and water. In addition, the soil treated with 10% FA1 and 25% FA1 was moistened and exposed to surrounding air during 3 weeks and leached hereafter during 7 days to evaluate influence of ageing reactions in APCR on stability of PFASs.

PFAS measurements in the eluates were performed using 500µL of leachate from the batch experiments into Eppendorf tubes (Germany) and fortified with 50µL internal standard solution and 450µL Methanol. The samples were filtrated through 0.45 µm recycled cellulose syringe filters into 2mL amber auto injection vials (Eppendorf, Germany), and were analyzed using a DIONEX UltiMate 3000 ultraperformance liquid chromatography system Thermo Scientific, Waltham, MA, USA) coupled to triple quadrupole mass spectrometer (MS/MS) (TSQ QUANTIVA, Thermo SCIENTIFIC, Waltham, MA, USA). The standards were chromatographically separated on a BEH C18 column (1.7 µm, 50 mm, Waters Corporation, Manchester, UK) by using acetonitrile and Millipore water with 5 mM ammonium acetate eluent gradient during 12 min and a flow rate of 0.5 mL /min in negative electrospray mode. A nine-point calibration curve were used for quantification, ranging between 0.00001-0.10 µg/mL with a threshold curve fit of R² > 0.99.

Total concentration of PFASs in the soil was determined using methanol or acetonitrile ultrasonic extraction. Concentration of PFASs in extracted solution was analysed using the same method as described for the eluates.

Z-potential (surface charge) was evaluated on a subset of the fly ashes (n = 7) (WP2). The samples were prepared by shaking fly ash and milliQ water for 24h. Analysis of z-potential were performed using Zetasizer NanoZS (25°C, HeNe red laser, wavelength of 633 nm, ZEN3600, Malvern Instruments) by using Laser Doppler velocimetry (measured with a 12.8° angle in a folded capillary cell (DTS 1070, Malvern Instruments) and further Henry's equation was used for conversion from electrophoretic mobility to zeta potential. A full method description is given in Bollyn Jessica, Nijsen Mathias, Baken Stijn, Joye Iris, Waegeneers Nadia, Cornelis Geert, Smolders Erik (2016) Polyphosphates and Fulvates Enhance Environmental Stability of PO4-Bearing Colloidal Iron Oxyhydroxides, Journal of Agricultural and Food Chemistry 64(45),8465-8473.

The concentrations of metals in eluates were measured using inductivelycoupled plasma optical emission spectroscopy (ICPeOES, Perkin Elmer Optima 2000 DV) following the USEPA Methods 200.7 and 200.8.

Detailed knowledge of PFASs sorption behavior is helpful for developing effective stabilization techniques for contaminated soil. Yu Q, Zhang R, Deng S, Huang J & Yu G (2009) Sorption of perfluorooctane sulfonate and perfluorooctanoate on activated carbon and resin: kinetic and isotherm study. Water Research 43: 1150-1158, showed that the most important types of interaction involved in PFAS sorption to potential sorbents are electrostatic interaction, hydrophobic interaction and ion exchange. Electrostatic interaction between PFASs in solution and sorbents significantly depends on pH. Anionic PFASs are adsorbed by positively charged surfaces of the sorbents. When the pH of a PFAS-contaminated solution becomes more acidic than the adsorbent's pHpzc (pH of the point of zero charge), the number of positively charged sites on the sorbent increases (by surface protonation), the adsorption of negatively charged PFASs is enhanced.

Hydrophobic interaction between PFASs and sorbents is strongest when sorbents are uncharged as shown, i.a. by Yu et al., 2009 as above. Ion exchange is the dominant mechanism for immobilization of anionic PFASs especially for short chain PFASs when anion-exchange resin is used. The described sorption mechanisms of PFASs on sorbents are very complex since immobilization of PFASs in stabilized soil depends not only on properties of the added sorbent but also on soil characteristics (e.g. organic matter content) and leaching conditions (e.g. pH, redox potential, temperature).

The pH of soil had increased from 6.7 to 8 and 8.2 after treatment with 4% AC and FA1 respectively. Addition of 10% APCRs resulted in further increasing of pH. For example, FA1 increased pH to about 9.1 and FA2 and FA5 increased pH to about 12.6. Increase of pH in soil/APCR mixture is positively related to the content of lime in APCRs. Aged samples of FA1 (exposed to CO2 in ambient air) were carbonated and pH decreased about 5 to 6% (from 9.2 to 8.7 in mixtures with 10% FA1 and from 9.9 to 9.3 with 25% FA1). Carbonation of aged FA1 was not completed since the reported values of pH for fully carbonated fly ash is about 8.3. Surrounding air contained probably less than 1% of CO₂ which could not provide full carbonation during three weeks of ageing.

Table 4 shows measured concentrations of various types of metals in eluates after the leaching test, for the different types of fly ash/APCR on their own as well as for the untreated soil and the different mixtures. The two lowermost rows list the threshold values for depositing at landfills for non-hazardous waste (NHW) and hazardous waste (HW), respectively.

Apart from the immobilization of PFASs, this treatment method had decreased release of Pb, Cd, Zn and Ba in the mixtures compared to fly ash or APCR on its own. For example, the release of Zn and Ba decreased for all the different types of APCR, although there was an increase for fly ash FA1. For example, for Zn the release increased from 2.4 mg/kg to 4.6 mg/kg for 4 % of fly ash FA1. Cd was only leached from FA1 and as can be seen from Table 4, the leached amounts in the mixtures of soil and FA1 were reduced to approximately 1/10 compared to FA1 on its own. For So10%FA7 there was a particularly significant decrease in the release of Ba, from 530 mg/kg in the APCR to 9.2 mg/kg in the mixture. w from APCRs. For Pb, the release decreased significantly for all types of fly ash/APCR (to 0 for most of them) and for all concentrations. These elements were probably sorbed by soil (e.g. onto negatively charged soil particles and/or Fe/Al hydr(oxides)). Thus, soil and APCRs showed synergy effects in this treatment.

As can be seen, the test also shows increased release of arsenic (As), molybdenum (Mo), antimony (Sb) (especially in the mixture of soil/FA1) and copper (Cu) from APCRs. The mobilization of Cu was probably related to the formation of complexes with DOC (that was released in increased amounts from the soil under alkaline pH). The increased release of As, Mo and Sb could be attributed to the alkaline pH combined with reducing conditions. Release of these elements from the surface of APCR particles could enable empty spaces for the sorption of PFASs. Thus, ion-exchange could be also possible immobilization mechanism for PFASs in the soil treated with APCRs.

Looking at the leaching limit values for landfilling, soil treated with APCRs could be landfilled at landfills for hazardous waste. Soil treated with 4% FA1, and 10% FA2, FA4, FA5, FA6 and FA7 could be disposed at landfills for non-hazardous waste.

Table 4 shows the concentrations of metals in eluates from the leaching test at L/S = 10 L/kg. Leached concentrations from APCRs, soil and treated soil are compared to the leaching limit values for landfilling of non-hazardous waste (NHW) and hazardous waste (HW) (SEPA, 2004).

The values shown in bold are the concentrations that are above the leaching limit for deposit as non-hazardous waste. The values shown in italics are the ones that were mobilized by treatment, that is, that were leached in higher concentrations after treatment. Only one value was above the leaching limit for deposit as hazardous waste: the amount of Ba in FA7 before treatment, shown as bold italics. In other words, all mixtures are within the limits for depositing as hazardous waste. The mixtures with FA2, FA3, FA4, FA5, FA6 and FA7 were within the limits for depositing as non-hazardous waste with regard to all of these metals.

**Table 4: concentrations of metals in eluates**

| | **Cr** mg/kg | **Ni** mg/kg | **Cu** mg/kg | **Zn** mg/kg | **As** mg/kg | **Se** mg/kg | **Mo** mg/kg | **Cd** mg/kg | **Sb** mg/kg | **Ba** mg/kg | **Pb** mg/kg |
|---|---|---|---|---|---|---|---|---|---|---|---|
| FA1 | 23 | 0,1 | 0,1 | 2,4 | 1,0 | 0,5 | 8,2 | 0,2 | **1,8** | 2,5 | 0,6 |
| FA2 | **19** | 0,1 | 0,1 | 9,1 | 0,02 | 0,5 | 3,3 | 0,00 | 0,0 | 4,1 | 2,5 |
| FA3 | 1,5 | 0,1 | 0,8 | 44 | 0,02 | 0,5 | 3,7 | 0,00 | 0,0 | 16 | 270 |
| FA4 | 0,1 | 0,1 | 0,6 | 0,6 | 0,1 | 0,5 | 2,8 | 0,00 | 0,0 | 16 | 0,9 |
| FA5 | **20** | 0,1 | 2,4 | 40 | 0,4 | 0,5 | 4,1 | 0,00 | 0,0 | 13 | 260 |
| FA6 | **13** | 0,1 | 0,1 | 19,0 | 0,0 | 0,5 | 1,3 | 0,00 | 0,0 | 4,6 | 6,0 |
| FA7 | 0,0 | 0,1 | 0,3 | 2,2 | 0,0 | 0,02 | 3,8 | 0,00 | 0,2 | ***530*** | 7,0 |
| Soil | 0,1 | 0,0 | 0,3 | 0,5 | 0,2 | 0,01 | 0,0 | 0,01 | 0,0 | 1 | 0,1 |
| So4%FA1 | 5,0 | 0,1 | *0,4* | 4,6 | *1,5* | 0,03 | 1,7 | 0,03 | **1,9** | *3,1* | 0,0 |
| So10%FA1 | **11** | 0,0 | *0,4* | 0,2 | **2** | 0,08 | 4,4 | 0,02 | **3,3** | *4,6* | 0,0 |
| So25%FA1 | **21** | 0,0 | *0,7* | 0,4 | *1,6* | 0,15 | *9,7* | 0,02 | **2,8** | *5,4* | 0,0 |
| So4%FA2 | 0,5 | 0,4 | *3,6* | 0,2 | 0,2 | 0,1 | 0,3 | 0,00 | 0,04 | 3,5 | 0,0 |
| So10%FA2 | 0,5 | 2,7 | *4,6* | 0,1 | 0,1 | 0,2 | 0,4 | 0,00 | 0,01 | 6,2 | 0,0 |
| So10%FA3 | 0,3 | 0,1 | *5,1* | 0,1 | 0,1 | 0,03 | 0,6 | 0,01 | **1,8** | 6,6 | 0,0 |
| So10%FA4 | 0,0 | 0,0 | *7,5* | 0,0 | 0,1 | 0,1 | 0,5 | 0,00 | 1,6 | 7,0 | 0,0 |
| So10%FA5 | 1,5 | 0,2 | *10,5* | 19,2 | 0,2 | 0,05 | 0,7 | 0,00 | 0,01 | 4,8 | 2,8 |
| So10%FA6 | 0,4 | 0,1 | *3,2* | 0,3 | 0,1 | 0,03 | 0,4 | 0,00 | 0,7 | 2,7 | 0,0 |
| So10%FA7 Landfill | 0,1 | 0,0 | *5,7* | 0,0 | 0,1 | 0,05 | 1,0 | 0,00 | 0,4 | 9,2 | 0,0 |
| NHW | 10 | 10 | 50 | 50 | 2 | 0,5 | 10 | 1 | 0,7 | 100 | 10 |
| Landfill HW | 70 | 40 | 100 | 200 | 25 | 7 | 30 | 5 | 5 | 300 | 50 |

## Claims

1. Use of fly ash or Air Pollution Control Residue, APCR, for treatment of soil contaminated by per- and poly-fluoroalkyl substances, PFASs, **characterized in that** the fly ash or APCR is obtainable by combustion of biomass such as waste or wood chips, wherein the fly ash or APCR and the soil are mixed.

2. Use according to claim 1, wherein the fly ash or APCR is obtainable by combustion of wood chips.

3. Use according to claim 2, wherein the fly ash or APCR is treated with an electrostatic precipitator

4. Use according to claim 2, wherein the fly ash or APCR is treated with a bag filter combined with dry scrubber and with the addition of CaO.

5. Use according to claim 1, using APCR, wherein the APCR is obtainable by combustion of waste.

6. Use according to any one of the preceding claims, wherein the fly ash or APCR has a Z potential lower than 0, preferably lower than -2, even more preferably lower than -8.

7. Use according to any one of the preceding claims, comprising the step of mixing the soil with the fly ash or APCR in a soil mixer.

8. Use according to any one of the preceding claims, comprising the step of depositing the mixture of soil and fly ash or APCR in a landfill.

9. Use according to any one of the preceding claims, for the treatment of perfluorooctane sulfonic acid, PFOS, contaminated soil.

10. A method of stabilizing PFASs in contaminated soil, comprising the step of mixing soil with fly ash or APCR, characterized that the APCR is obtainable by the combustion of wood or waste and cleaning of the flue gas through an electrostatic precipitator.

11. A method according to claim 10, wherein the fraction of fly ash relative to the soil is at least 4 %, more preferably at least 10 %, even more preferably 25 %.

## Patentansprüche

1. Verwendung von Flugasche oder Luftverschmutzungskontrollrückstand, APCR, für eine Behandlung von Boden, der durch Per- und Polyfluoralkylsubstanzen, PFASs, verunreinigt ist, **dadurch gekennzeichnet, dass** die Flugasche oder der APCR durch Verbrennung von Biomasse wie Abfall- oder Holzspänen erhältlich ist, wobei die Flugasche oder der APCR und der Boden gemischt werden.

2. Verwendung nach Anspruch 1, wobei die Flugasche oder der APCR durch Verbrennung von Holzspänen erhältlich ist.

3. Verwendung nach Anspruch 2, wobei die Flugasche oder der APCR mit einem elektrostatischen Abscheider behandelt wird

4. Verwendung nach Anspruch 2, wobei die Flugasche oder der APCR mit einem Beutelfilter behandelt wird, der mit einem Trockenwäscher und mit der Zugabe von CaO kombiniert wird.

5. Verwendung nach Anspruch 1 unter Verwendung von APCR, wobei der APCR durch Verbrennung von Abfall erhältlich ist.

6. Verwendung nach einem der vorstehenden Ansprüche, wobei die Flugasche oder der APCR ein Zetapotential aufweist, das niedriger als 0, vorzugsweise niedriger als -2, noch mehr bevorzugt niedriger als -8 ist.

7. Verwendung nach einem der vorstehenden Ansprüche, umfassend den Schritt des Mischens des Bodens mit der Flugasche oder dem APCR in einem Bodenmischer.

8. Verwendung nach einem der vorstehenden Ansprüche, umfassend den Schritt eines Abscheidens der Mischung aus Boden und Flugasche oder APCR in einer Deponie.

9. Verwendung nach einem der vorstehenden Ansprüche für die Behandlung von mit Perfluoroctansulfonsäure, PFOS, verunreinigtem Boden.

10. Verfahren zum Stabilisieren von PFASs in verunreinigtem Boden, umfassend den Schritt des Mischens von Boden mit Flugasche oder APCR, **dadurch gekennzeichnet, dass** der APCR durch die Verbrennung von Holz oder Abfall und Reinigen des Rauchgases durch einen elektrostatischen Abscheider erhältlich ist.

11. Verfahren nach Anspruch 10, wobei der Anteil an Flugasche relativ zu dem Boden mindestens 4 %, mehr bevorzugt mindestens 10 %, noch mehr bevorzugt 25 % beträgt.

## Revendications

1. Utilisation de cendres volantes ou de résidus de contrôle de la pollution de l'air (RCPA) pour le traitement des sols contaminés par des substances per- et polyfluoroalkylées (PFAS), **caractérisée en ce que** les cendres volantes ou les RCPA peuvent être obtenus par combustion de la biomasse comme des déchets ou des copeaux de bois, dans lequel les cendres volantes ou les RCPA et le sol sont mélangés.

2. Utilisation selon la revendication 1, dans laquelle les cendres volantes ou les RCPA peuvent être obtenus par combustion de copeaux de bois.

3. Utilisation selon la revendication 2, dans laquelle les cendres volantes ou les RCPA sont traités avec un dépoussiéreur électrostatique.

4. Utilisation selon la revendication 2, dans laquelle les cendres volantes ou les RCPA sont traités avec un filtre à manches combiné avec un épurateur à sec et avec l'ajout de CaO.

5. Utilisation selon la revendication 1, à l'aide des RCPA, dans laquelle les RCPA peuvent être obtenus par combustion de déchets.

6. Utilisation selon l'une quelconque des revendications précédentes, dans laquelle les cendres volantes ou les RCPA ont un potentiel Z inférieur à 0, de préférence inférieur à -2, encore plus préférablement inférieur à -8.

7. Utilisation selon l'une quelconque des revendications précédentes, comprenant l'étape de mélange du sol avec les cendres volantes ou les RCPA dans un mélangeur de sol.

8. Utilisation selon l'une quelconque des revendications précédentes, comprenant l'étape de dépôt du mélange du sol et des cendres volantes ou des RCPA dans une décharge.

9. Utilisation selon l'une quelconque des revendications précédentes, pour le traitement de l'acide perfluorooctane sulfonique, du PFOS, du sol contaminé.

10. Procédé de stabilisation des PFAS dans un sol contaminé, comprenant l'étape de mélange du sol avec des cendres volantes ou des RCPA, **caractérisé en ce que** les RCPA peuvent être obtenus par la combustion du bois ou des déchets et l'épuration des fumées à travers un dépoussiéreur électrostatique.

11. Procédé selon la revendication 10, dans lequel la fraction de cendres volantes par rapport au sol est d'au moins 4 %, plus préférablement d'au moins 10 %, encore plus préférablement de 25 %.
